# DEMANDE DE BREVET EUROPEEN

(11) **EP 4 482 157 A1**
(43) Date de publication de la demande: **25.12.2024**
(21) Numéro de dépôt: 24176926.4
(22) Date de dépôt: 21.05.2024
(51) Int. Cl.: H04N 21/2387, H04N 21/432, H04N 21/433, H04N 21/488, H04N 21/6587

(54) **PROCÉDÉ DE GESTION DE LA RESTITUTION D'UN CONTENU MULTIMÉDIA**

(30) Priorité: 21.06.2023 FR 2306399
(71) Demandeur: Orange, 92130 Issy-les-Moulineaux (FR)
(72) Inventeur: MARCHAND, Hervé, 92326 Chatillon (FR); GASTE, Olivier, 92326 Chatillon (FR)

(57) **Abrégé**

L'invention concerne un procédé de gestion de gestion de la lecture par un dispositif de lecture (STB) d'un contenu enregistré sur un support de données (SRV), caractérisé en ce qu'il comprend, lors d'un accès en lecture par le dispositif de lecture à un contenu enregistré et ayant été diffusé en direct, une demande d'ajout, lors de la restitution du contenu rediffusé, d'une donnée (R) représentative d'une lecture d'un contenu rediffusé si la durée entre l'instant courant de diffusion (Hc) et l'instant de rediffusion (Hr) est supérieure à une durée donnée (T).

## Description

### Domaine technique

Le domaine de l'invention est celui des contenus multimédias numériques, à savoir les contenus audio et/ou vidéo numériques, également appelés contenus audiovisuels.

L'invention se rapporte tout particulièrement à un procédé de gestion de la lecture d'un contenu ayant déjà été diffusé en direct. Un tel contenu est par exemple un événement sportif, un concert, etc.

Un dispositif de lecture vise tout dispositifs aptes à recevoir des flux multimédias par exemple un décodeur, un téléphone mobile, une tablette, etc.

### Etat de la technique

Les chaînes de télévision diffusent des émissions en direct. Ces émissions peuvent être enregistrées sur un support de données qui peut être local, par exemple sur un support de données associé au dispositif de lecture.

L'utilisateur a aussi la possibilité, grâce à une fonction de lecture appelée « startover » (appelée aussi « reprendre depuis le début » ou « reprendre depuis un instant antérieur ») de revenir en arrière dans le contenu dans une fenêtre temporelle allant jusqu'à quatre heures précédant l'instant courant et lire le contenu depuis un instant choisi dans la fenêtre temporelle, on parle alors d'instant de rediffusion. Pour offrir cette fonction, l'émetteur de contenus enregistre le flux multimédia lorsqu'il est diffusé en direct, et met à disposition ce contenu enregistré sur requête par la suite.

Les inventeurs ont constaté que le contenu lu depuis l'enregistreur ou issu d'une commande de retour de type « startover », était le même. Or, lorsque le contenu concerne un contenu diffusé en direct et que la restitution mentionne ce direct, celle-ci n'a plus lieu d'être. De plus, ce type d'information périmée peut perturber un utilisateur qui visualise le contenu. L'expérience utilisateur n'est pas optimale.

### L'invention vient améliorer la situation.

L'invention se rapporte à un procédé de gestion de la lecture par un dispositif de lecture d'un contenu enregistré sur un support de données, caractérisé en ce qu'il comprend, lors d'un accès en lecture par le dispositif de lecture à un contenu enregistré et ayant été diffusé en direct, une demande d'ajout, lors de la restitution du contenu rediffusé, d'une donnée représentative d'une lecture d'un contenu rediffusé si la durée entre l'instant courant de diffusion et l'instant de rediffusion est supérieure à une durée donnée.

L'invention permet d'ajouter une donnée informant que le contenu restitué, bien qu'ayant été diffusé en direct, est désormais diffusé en différé lorsque la durée entre l'instant courant de diffusion et l'instant de rediffusion est supérieure à une durée donnée . Un utilisateur visualisant le contenu est de cette manière informé que le contenu restitué n'est pas du direct lorsque la durée visée ci-dessus dépasse un seuil donné ; à l'inverse, en dessous d'une durée seuil (par exemple pour une lecture en différée de quelques secondes) il n'y a pas de demande d'ajout d'une donnée représentative d'une lecture d'un contenu rediffusé. Cela permet à la fois de ne pas perturber l'utilisateur (si le contenu restitué comporte une mention de type « Direct », cette mention est par exemple maintenue) et de réduire la charge CPU car le dispositif de lecture n'a pas dans ce cas à requérir d'ajout de données informant que le contenu restitué est une rediffusion.

Selon un premier mode de réalisation, la donnée représentative d'une lecture d'un contenu rediffusé est incluse dans le flux de données reçu correspondant au contenu. Ce mode est intéressant en ce que le dispositif de lecture ne gère pas l'obtention de la donnée à afficher ; cette donnée étant transmise par l'émetteur du contenu à restituer. Selon une variante, la donnée représentative d'une lecture d'un contenu enregistré pourrait être ajoutée par le dispositif de lecture. Dans ce cas, la gestion est réalisée en local.

Selon un deuxième mode de réalisation, qui pourra être mis en oeuvre alternativement ou cumulativement avec le précédent mode, la durée donnée est incluse dans le flux de données reçu correspondant au contenu enregistré.

Selon un troisième mode de réalisation, qui pourra être mis en oeuvre alternativement ou cumulativement avec les précédents modes, la durée donnée est incluse dans le flux de données transmis correspondant au contenu enregistré. Dans ce mode, le dispositif de lecture reçoit la durée et se charge de comparer les instants de diffusion et de rediffusion.

Selon un premier aspect matériel, l'invention se rapporte à une entité de gestion de la lecture par un dispositif de lecture d'un contenu enregistré sur un support de données, caractérisé en ce que le dispositif de lecture comprend un processeur configuré pour, lors d'un accès en lecture par le dispositif de lecture à un contenu enregistré et ayant été diffusé en direct, requérir un ajout, lors de la restitution du contenu rediffusé, d'une donnée représentative d'une lecture d'un contenu rediffusé si la durée entre l'instant courant de diffusion (Hc) et l'instant de rediffusion (Hr) est supérieure à une durée donnée (T).

Selon un deuxième aspect matériel, l'invention se rapporte à un dispositif de lecture comprenant une entité de gestion telle que définie ci-dessus.

Selon un troisième aspect matériel, l'invention se rapporte à un premier programme d'ordinateur apte à être mis en oeuvre sur la première entité telle que définie ci-dessus, le programme comprenant des instructions de code qui, lorsqu'il est exécuté par un processeur, réalise les étapes du procédé de gestion définies ci-dessus.

Enfin, selon un quatrième aspect matériel, l'invention se rapporte à un premier support de données sur lequel a été mémorisée au moins une série d'instructions de code de programme pour l'exécution d'un procédé de gestion tel que défini en liaison avec le premier aspect fonctionnel.

Selon un deuxième aspect fonctionnel, l'invention se rapporte à un procédé de gestion de la transmission d'un contenu via un lien de communication à destination d'un dispositif de lecture, caractérisé en ce qu'il comprend, lorsque le contenu est un contenu enregistré ayant été diffusé en direct, une transmission à la fois du contenu enregistré et d'une demande d'ajout au dispositif de lecture lors de la restitution d'une donnée représentative d'une lecture d'un contenu rediffusé si la durée entre l'instant courant de diffusion (Hc) et l'instant de rediffusion (Hr) est supérieure à une durée donnée (T).

Selon ce deuxième aspect fonctionnel la demande de d'ajout comprend des valeurs à restituer en fonction d'un écart temporel entre l'instant de diffusion courant du contenu diffusé en direct et un instant de rediffusion.

Selon un cinquième aspect matériel, l'invention a trait à une deuxième entité de gestion de la transmission d'un contenu via un lien de communication à destination d'un dispositif de lecture, caractérisé en ce qu'il comprend, lorsque le contenu est un contenu enregistré ayant été diffusé en direct, une transmission à la fois du contenu enregistré et d'une demande d'ajout au dispositif de lecture lors de la restitution d'une donnée représentative d'une lecture d'un contenu rediffusé si la durée entre l'instant courant de diffusion (Hc) et l'instant de rediffusion (Hr) est supérieure à une durée donnée (T).

Selon un sixième aspect matériel, l'invention a trait à un serveur comprenant ladite deuxième entité visée ci-dessus.

Selon un septième aspect matériel, l'invention se rapporte à un deuxième programme d'ordinateur apte à être mis en oeuvre sur la deuxième entité telle que définie ci-dessus, le programme comprenant des instructions de code qui, lorsqu'il est exécuté par un processeur, réalise les étapes du procédé de transmission définies ci-dessus.

Enfin, selon un quatrième aspect matériel, l'invention se rapporte à un premier support de données sur lequel a été mémorisée au moins une série d'instructions de code de programme pour l'exécution d'un procédé de gestion tel que défini en liaison avec le premier aspect fonctionnel.

A noter qu'un support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] La figure 2 est un schéma synoptique simplifié de la structure matérielle du dispositif de lecture ;
[Fig. 3] La figure 3 est un schéma synoptique simplifié de la structure matérielle du serveur ;
[Fig. 4] La figure 4 illustre un mode de réalisation utilisant une fonction de type « startover » ou reprise de la lecture depuis un instant de diffusion antérieur et mettant en oeuvre une fenêtre temporelle glissante.
[Fig. 5] La figure 5 est une vue de l'état de la restitution sur un écran au fil du temps selon un mode de réalisation ; cette figure se divise en deux parties, une première partie supérieure illustrant le cas où l'écart temporel entre l'instant de diffusion courant et l'instant choisi de rediffusion est supérieur à une durée donnée, et une partie inférieure sur laquelle l'écart temporel entre l'instant de diffusion courant et l'instant choisi de rediffusion est inférieur à une durée donnée.

### Description détaillée d'un exemple de réalisation illustrant l'invention :

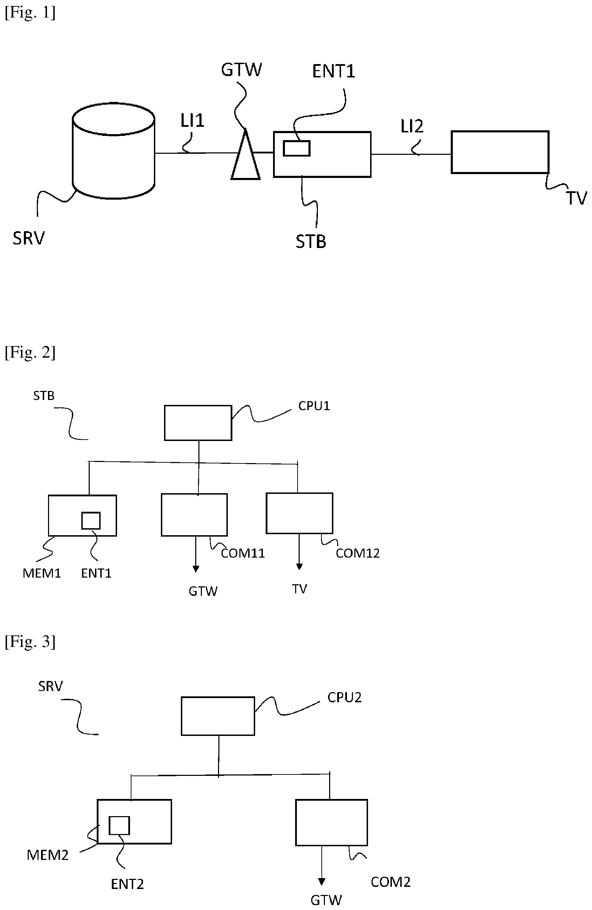

La figure 1 représente un système informatique dans lequel est mis en oeuvre un réseau de diffusion de contenus appelé CDN (Content Distribution Network) par l'homme du métier depuis lequel sont transmis des contenus à destination de dispositifs clients. Dans notre exemple, les dispositifs clients sont des dispositifs de lecture de contenus.

Dans notre exemple, pour simplifier l'exposé, le système SYS comprend un seul dispositif de lecture STB. Cependant l'invention s'applique à un nombre quelconque de dispositifs de lecture.

Le dispositif de lecture STB est par exemple un décodeur de télévision .

Le contenu multimédia visé ici est un contenu vidéo correspondant à une chaîne de télévision sur laquelle est diffusé un programme télévisé en direct.

Une fonction « startover » est prévue pour réaliser un saut temporel afin de relire le contenu depuis un instant antérieur donné. Cette fonction « startover » requiert un enregistrement du contenu pour pouvoir relire le contenu en mode rediffusion.

Pour la réalisation du mode « startover », l'enregistrement est réalisé hors du dispositif de lecture STB par exemple sur le serveur de contenus SRV. Cependant, l'invention peut aussi être mise en oeuvre avec un enregistrement local dans le dispositif de lecture STB.

Dans notre exemple, le dispositif de lecture STB est connecté sur un port du dispositif de restitution TV par exemple un écran de télévision ; le dispositif de lecture STB et le dispositif de restitution TV pourraient aussi former un seul et unique dispositif.

Dans notre exemple, le dispositif de lecture STB est situé dans un réseau local LAN géré par une passerelle domestique GTW.

La passerelle GTW est apte à communiquer via un réseau de télécommunication LI1 tel qu'un réseau étendu WAN connu de l'homme du métier.

Le CDN est constitué de serveurs reliés en réseau dans le réseau étendu ; ces serveurs coopèrent afin de mettre des contenus multimédias à disposition des utilisateurs. Afin de simplifier l'exposé de l'invention, un seul serveur de contenus SRV sera représenté sur la figure 1 pour représenter le CDN.

Le serveur de contenus SRV se trouve, dans notre exemple, dans le réseau étendu WAN. Le serveur SRV dispose de plusieurs sources de contenus multimédia. Le serveur de contenus SRV reçoit par exemple des chaînes de contenus de télévision numérique en provenance d'un réseau de télévision diffusée (non représenté), et les met à disposition des terminaux clients, ici le dispositif de lecture STB.

Parmi les contenus diffusés certains sont des contenus diffusés en direct aussi appelés contenu « Live » par l'homme du métier. Ce type de contenu à la particularité d'être transmis sur le réseau dès sa capture par un dispositif de capture tel qu'une caméra.

Le serveur de contenus SRV met aussi à disposition des contenus du type vidéo à la demande, télévision à la demande, ou tout autres contenus similaires.

Les contenus CNT sont mis à disposition dans un format donné. Un contenu CNT est, par exemple, un contenu téléchargé en mode de streaming adaptatif. La norme MPEG-DASH (pour l'anglais "Dynamic Adaptive Streaming over HTTP", en français « diffusion en flux adaptatif dynamique sur HTTP ») est un standard de format de diffusion audiovisuelle sur Internet ; ce standard se base sur la préparation du contenu en différentes représentations de qualité et débit variables, découpées en segments de courte durée (de l'ordre de quelques secondes), également appelés « chunks » par l'homme du métier. Chacun de ces segments est rendu disponible individuellement au moyen d'un protocole d'échange entre le terminal de restitution et le serveur fournisseur de contenus multimédias. Le protocole principalement ciblé est le protocole HTTP, mais d'autres protocoles (par exemple FTP) peuvent également être utilisés. L'organisation des segments et les paramètres associés sont publiés dans un fichier de description au format XML. Nous ne rentrerons pas plus dans les détails de ce mode de téléchargement car sans intérêt pour l'exposé de l'invention.

La figure 2 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le décodeur STB peut transmettre un contenu à restituer au dispositif de restitution TV via un module de communication COM12. Ce module COM12 est par exemple une liaison HDMI.

Le décodeur STB communique avec la passerelle via un module Ethernet pour une communication locale avec fils ou via un module radio de type Wi-Fi pour une communication locale sans fils avec la passerelle résidentielle GTW. Le module en question est référencé COM11 sur la figure 2.

Dans notre exemple, le décodeur STB comprend une entité de téléchargement en mode streaming (non représentée) apte à gérer le téléchargement de segments en mode de téléchargement adaptatif. L'invention ne se limite pas à ce mode de téléchargement, d'autres modes de téléchargement peuvent être utilisés pour la mise en oeuvre de l'invention, par exemple le mode de téléchargement IPTV connu de l'homme du métier.

Le décodeur STB comprend également une entité de gestion ENT1, dite première entité de gestion dans la suite, dont la fonction sera décrite ci-dessous.

En référence à la figure 3, le serveur SRV également est équipé d'au moins un processeur CPU2 et de mémoires MEM2 pour la réalisation de traitement informatique. Le serveur est également équipé d'une entité de gestion ENT2, dite deuxième entité, apte à gérer la transmission d'un contenu du serveur SRV à destination d'un ou plusieurs dispositifs de lecture. Le serveur SRV communique avec la passerelle GTW via réseau WAN pour une communiquer avec la passerelle résidentielle GTW. Le module en question est référencé COM2 sur la figure 3.

Le serveur SRV comprend aussi une entité ET2 dont la fonction sera décrite plus en détails ci-dessous. Dans notre exemple, cette entité ENT2 a pour rôle de transmettre des valeurs dont une est destinée à être restituée en même temps que le contenu sélectionné. On verra aussi que le serveur SRV, sous-entendu l'entité ENT2 transmet aussi une durée T qui permettra de choisir l'un des valeurs visées ci-dessus.

Un contenu live peut être enregistré et lu plus tard. Par exemple le serveur de contenus SRV peut rediffuser le contenu ; ou bien si le contenu a été enregistré dans une mémoire locale, il peut être lu directement lu à souhait depuis cette mémoire locale.

Par exemple, la fonction « startover » introduite ci-dessus permet à tout moment lors d'une lecture d'un contenu par le dispositif de lecture STB de revenir en arrière et relire le contenu depuis un instant de diffusion antérieur. La réalisation d'une telle fonction est possible en enregistrant le contenu. De manière à réduire la quantité de données à enregistrer, l'enregistrement du contenu s'effectue sur une fenêtre temporelle glissante d'une durée donnée, par exemple une fenêtre temporelle de quatre heures. En d'autres mots, lors de la lecture d'un contenu live, un utilisateur peut requérir une relecture du contenu qui a été diffusé en direct depuis un instant de rediffusion choisi dans la fenêtre temporelle fixée. Par exemple, en reprenant la fenêtre temporelle de quatre heures glissantes ; s'il est 20h, le contenu enregistré permet de remonter dans le temps jusqu'à quatre heures au maximum ; l'utilisateur peut par exemple remonter dans le temps de trois heures et revoir le contenu tel qu'l était diffusé à 17 heures ou ultérieurement ; s'il, est 20h10, une relecture d'un segment ayant été diffusé après 17h10 est possible.

Selon l'invention, lorsque le contenu enregistré pour lequel un accès est demandé est un contenu diffusé en cours de diffusion ou que la diffusion en direct est terminée, l'entité de gestion ENT1 requiert une demande d'ajout d'une donnée représentative d'une lecture d'un contenu rediffusé. On verra dans la suite que cette demande d'ajout peut être réalisée sous condition.

Rappelons ici que, si le contenu est en cours de restitution, la fonction « startover » permet de faire un saut temporel apte à relire le contenu depuis un instant de diffusion choisi.

Selon une variante, le serveur de contenus SRV transmet le contenu et une information indiquant que le contenu demandé est un contenu enregistré ayant déjà fait l'objet d'une diffusion en direct.

Selon une variante, les entités ENT1/ENT2 peuvent inclure un programme de reconnaissance aptes à de déterminer si un contenu est un contenu ayant été diffusé en direct.

L'exemple décrit ci-dessous se base sur un saut temporel dans le passé en exécutant la fonction « startover ». Les étapes sont les suivantes :
Lors d'une étape ET1, une requête d'accès à un contenu diffusé en direct, par exemple un match de football, est transmis depuis le dispositif de lecture STB à destination du serveur au travers de la passerelle GTW. Supposons que cet accès est effectué à 20h00.

Lors d'une deuxième étape, le serveur de contenus SRV transmet le contenu diffusé en direct.

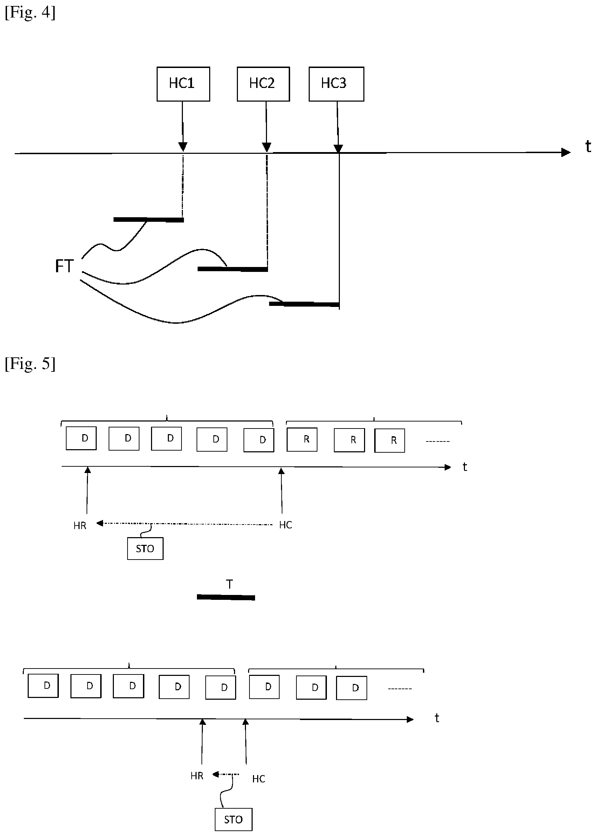

De manière à offrir la fonction « startover », le serveur enregistre automatiquement le contenu diffusé en direct sur une plage temporelle glissante de quatre heures. La figure 4 illustre schématiquement le fonctionnement d'une fenêtre temporelle glissante. Trois instants de diffusion Hc1, Hc2, Hc3 sont représentés sur un axe temporel. Aux trois instants de diffusion correspond une fenêtre temporelle FT. Au cours de cette fenêtre temporelle FT, le contenu est enregistré ; du fait du glissement de la fenêtre temporelle, les segments enregistrés à un instant donné qui ne se trouvent plus dans la fenêtre temporelle glissante à un instant ultérieur sont effacés. Un retour en arrière dans le contenu peut alors être effectué en sélectionnant un instant de rediffusion dans cette fenêtre temporelle.

Supposons qu'à 20h30 (Hc1=20h30) la fonction « startover » est activée pendant la restitution du match. Un utilisateur sélectionne un instant de rediffusion dans cette fenêtre temporelle FT pour revoir une scène du match de football.

Supposons que l'instant de rediffusion choisi est 15 minutes précédant l'heure courante à savoir 20h15.

Le serveur SRV reçoit la requête en rediffusion et transmet le flux de données enregistré en retour.

Dans notre exemple, comme le contenu concerné est un contenu ayant été diffusé en direct, le serveur de contenus SRV ajoute des informations à savoir :
- Deux valeurs : Direct/Rediffusion
- Une durée T

Les valeurs sont au nombre de deux mais pourrait être supérieures.

Dans notre exemple, l'une des deux valeurs sera restituée sous condition. Le fonctionnement est le suivant :
- Si la durée entre l'instant courant et l'instant de rediffusion choisi est inférieure à la durée T, la valeur « Direct » est restituée sur l'écran.
- Si la durée entre l'instant courant et l'instant de rediffusion choisi est supérieure à la durée T, la valeur « Rediffusion » est restituée

Cette valeur T est par exemple de trois minutes. En d'autres mots, on considérera qu'un saut temporel de moins de trois minutes dans le passé équivaut à du direct, au-delà on considère que c'est une rediffusion.

A réception, le dispositif de lecture dispositif de lecture STB reçoit les valeurs et la durée T visées ci-dessus.

Dans notre exemple, l'entité de gestion ENT1 se charge de déterminer l'écart temporel entre l'instant courant tc et l'instant de rediffusion et de comparer cet écart avec la valeur T afin de déterminer quelle valeur entre Direct et Rediffusion sera restituée sur le téléviseur TV.

A noter que le lieu de détermination de l'écart temporel est quelconque.

L'écart est de 15 minutes dans notre exemple ; l'entité de gestion ENT1 requiert une restitution de la valeur « Rediffusion ».

Un utilisateur visualisant le match est alors informé que le match restitué n'est pas du direct ; l'information peut être transmise sous forme de notification sonore et/ou sous forme d'image. Cette information intéressera d'autant plus un utilisateur arrivé en cours du match et qui n'est pas à l'origine de l'activation de la fonction « startover » ; celui-ci constate alors que le contenu restitué est une rediffusion et pas un direct.

Selon une variante, le calcul de l'écart temporel n'est pas obligatoire. Une rediffusion peut tout simplement déclencher la restitution d'une donnée représentative d'une rediffusion.

Par exemple, si le contenu- en question, le match dans notre exemple, est enregistré sur un support de données, tel qu'un disque dur, associé au dispositif de lecture STB. Dans ce cas, une lecture peut tout simplement déclencher la restitution d'une donnée représentative d'une lecture d'un contenu enregistré. Dans cet exemple, le dispositif de lecture STB dispose que d'une seule valeur « Rediffusion », cette valeur étant restituée dès qu'un contenu ayant été diffusé en direct est lu sur le support de données.

La restitution des valeurs relatives au direct ou à la rediffusion peut être réaliser de plusieurs manières.

Considérons par exemple un contenu enregistré avec la mention « Direct ». Dans ce cas,
A. Soit l'écart temporel visé ci-dessus est inférieur à la durée T (représentée sur la figure 5), dans ce cas l'indication relative au direct, s'il y en a une dans le flux de données reçu, peut être maintenue sans modification ;
B. Soit l'écart temporel est supérieur à la durée T ; dans ce cas, l'indication relative au directe est modifiée. La modification peut consister à retirer la mention « Direct » par une mention « rediffusion ».

Les deux cas A et B qui précèdent sont illustrés sur la figure 5. Cette figure 5 comprend un axe temporel « t » pour indiquer le sens de la lecture du contenu. La figure 5 partie haute illustre le cas A et partie basse le cas B.

Dans un premier temps, le contenu est reçu en direct. L'écran affiche classiquement une information indiquant que l'émission est en direct avec la référence D.

A un instant courant Hc, un accès au mode startover STO est exécuté. Un instant de rediffusion Hr est sélectionné ; A ce stade, comme indiqué ci-dessus, l'entité de gestion ENT1 calcul l'écart temporel entre l'heure courante Hc et l'instant de rediffusion Hr souhaité pour la rediffusion et compare cet écart avec la durée donnée T. Dans notre exemple, l'écart est supérieur à la durée T ; dans ce cas l'entité ENT1 requiert la restitution de la valeur « Rediffusion » référencée R sur l'écran.

La partie basse de la figure 5 illustre le cas où l'écart est inférieur à T ; dans ce cas, l'entité de gestion ENT ne modifie pas l'affichage. En supposant que la mention Direct ne soit pas incluse dans le contenu restitué, l'entité peut éventuellement ajouter la valeur « Direct » référencée D pour indiquer que la restitution est en directe. Dans ce cas, l'invention améliore la restitution en ajoutant des informations.

Dans les deux cas ci-dessus, on comprend bien que les images restituées avant l'heure courante Hc sont issues du flux Direct (live) et que les images restituées après l'heure courante Hc sont issues d'un enregistrement du flux Live.

Précisons enfin ici que le terme module ou le terme entité peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé de gestion de la lecture par un dispositif de lecture (STB) d'un contenu enregistré sur un support de données (SRV,MEM), **caractérisé en ce qu'**il comprend, lors d'un accès en lecture par le dispositif de lecture à un contenu enregistré et ayant été diffusé en direct, une demande d'ajout, lors de la restitution du contenu rediffusé, d'une donnée (R) représentative d'une lecture d'un contenu rediffusé si la durée entre l'instant courant de diffusion (Hc) et l'instant de rediffusion (Hr) est supérieure à une durée donnée (T).

2. Procédé de gestion selon la revendication 1, **caractérisé en ce que** la donnée représentative d'une lecture d'un contenu rediffusé (R) est incluse dans le flux de données reçu correspondant au contenu.

3. Procédé de gestion selon la revendication 1 ou 2, **caractérisé en ce que** la donnée (R) représentative d'une lecture d'un contenu enregistré est ajoutée par le dispositif de lecture.

4. Procédé de gestion selon la revendication 1, **caractérisé en ce que** la durée donnée (T) est incluse dans le flux de données reçu correspondant au contenu enregistré.

5. Entité de gestion (ENT1) de la lecture par un dispositif de lecture (STB) d'un contenu enregistré sur un support de données, **caractérisé en ce que** le dispositif de lecture (STB) comprend un processeur configuré pour, lors d'un accès en lecture par le dispositif de lecture à un contenu enregistré et ayant été diffusé en direct, requérir un ajout, lors de la restitution du contenu rediffusé, d'une donnée représentative d'une lecture d'un contenu rediffusé si la durée entre l'instant courant de diffusion (Hc) et l'instant de rediffusion (Hr) est supérieure à une durée donnée (T).

6. Programme d'ordinateur apte à être mis en oeuvre sur une entité de gestion (ENT1) telle que définie dans la revendication 5, le programme comprenant des instructions de code qui, lorsqu'il est exécuté par un processeur, réalise les étapes du procédé définies dans la revendication 1.

7. Procédé de gestion de la transmission d'un contenu (CNT) via un lien de communication (RES) à destination d'un dispositif de lectur, **caractérisé en ce qu'**il comprend, lorsque le contenu est un contenu enregistré ayant été diffusé en direct, une transmission à la fois du contenu enregistré et d'une demande d'ajout, au dispositif de lecture, lors de la restitution, d'une donnée (R) représentative d'une lecture d'un contenu rediffusé si la durée entre l'instant courant de diffusion (Hc) et l'instant de rediffusion (Hr) est supérieure à une durée donnée (T).

8. Entité de gestion (ENT2) de la transmission d'un contenu via un lien de communication à destination d'un dispositif de lecture, **caractérisé en ce qu'**il comprend, lorsque le contenu est un contenu enregistré ayant été diffusé en direct, une transmission à la fois du contenu enregistré et d'une demande d'ajout au dispositif de lecture lors de la restitution d'une donnée représentative d'une lecture d'un contenu rediffusé si la durée entre l'instant courant de diffusion (Hc) et l'instant de rediffusion (Hr) est supérieure à une durée donnée (T).

9. Serveur comprenant une entité (ENT2) telle que définie dans la revendication 8.

10. Programme d'ordinateur apte à être mis en oeuvre sur une entité de gestion (ENT2) telle que définie dans la revendication 8, le programme comprenant des instructions de code qui, lorsqu'il est exécuté par un processeur, réalise les étapes du procédé définies dans la revendication 7.
